# EUROPÄISCHE PATENTSCHRIFT

(11) **EP 0 722 880 B1**
(45) Veröffentlichungstag und Bekanntmachung des Hinweises auf die Patenterteilung: **16.08.2000**
(21) Anmeldenummer: 96100481.9
(22) Anmeldetag: 15.01.1996
(51) Int. Cl.: B62D 25/06, B60R 13/02, B60J 3/02, B60N 3/02

(54) **Kraftfahrzeugdach mit zumindest einem daran befestigten Dachanbauteil sowie Montagevorrichtung für Dachanbauteile**
Roof of a motor vehicle with at least one accessory fixed thereon and mounting system for accessories
Toit d'un véhicule automobile avec au moins un accessoire fixé et système de montage pour accessoires

(30) Priorität: 18.01.1995 DE 19501357
(43) Veröffentlichungstag der Anmeldung: 24.07.1996
(60) Teilanmeldung: 99115746.2
(73) Patentinhaber: ADAM OPEL AG, 65423 Rüsselsheim (DE)
(72) Erfinder: Plegge, Wolfgang, Dipl.-Ing., D-65428 Rüsselsheim (DE); Loitz, Joachim-Günther, D-55232 Alzey (DE)
(74) Vertreter: Bergerin, Ralf, Dipl.-Ing.

(56) Entgegenhaltungen:
- EP-A- 0 018 851
- WO-A-96/17178
- DE-A- 3 112 160
- DE-B- 1 106 618
- DE-B- 1 260 876
- DE-U- 7 927 468
- FR-A- 2 428 540
- GB-A- 1 468 954

## Beschreibung

Die Erfindung betrifft ein Kraftfahrzeugdach mit zumindest einer daran befestigten Schwenkachse einer Sonnenblende, welches zum Halten der Schwenkachse eine Federklammer zum Verrasten mit einer Rastausnehmung in einem Karosserieblech des Kraftfahrzeugdaches aufweist, wobei das Karosserieblech im Bereich der Rastausnehmung horizontal ausgerichtet und die Federklammer mit ersten Klemmflächen lösbar mit der Schwenkachse und mit zweiten, als federnde Rasten ausgebildeten Klemmflächen hinter die Rastausnehmung greift. Weiterhin betrifft die Erfindung eine Montagevorrichtung für solche Sonnenblenden.

Ein Kraftfahrzeugdach der vorstehenden Art ist Gegenstand der GB-A-1468954. Bei dem bekannten Kraftfahrzeugdach greift die Klemmfeder unmittelbar mit ihren Klemmflächen an der Schwenkachse der Sonnenblende an und dient zugleich als Lager für die Schwenkachse.

Es ist auch bereits bekannt, die Schwenkachse einer Sonnenblende in einem als Lagerbock als Dachanbauteil zu lagern, was die DE-U-79 27 468 zeigt. Dieser vorbekannte Lagerbock erfordert eine im Durchmesser relativ große Rastausnehmung im Fahrzeugdach, in welches der Lagerbock, welcher üblicherweise aus Kunststoff im Spritzgießverfahren hergestellt wird, mit einem zylindrischen Gehäusebereich einzurasten vermag. Weiterhin müssen die Rastausnehmung und der zylindrische Gehäusebereich eng toleriert sein, damit der Lagerbock zuverlässig im Fahrzeugdach hält. Ein Ausbau des Lagerbocks ist nur dadurch möglich, daß man mit Gewalt an ihm zieht und dabei seine widerhakenartigen, hinter die Rastausnehmung greifenden Rastvorsprünge zerstört. Eine solche Zerstörung, welche jeweils einen Austausch des Dachanbauteils erforderlich macht, kann jedoch aus Wirtschaftlichkeitsgründen heute meist nicht mehr hingenommen werden.

Die Montage von Sonnenblenden erfolgt bislang dadurch, daß im Kraftfahrzeug die Dachanbauteile einzeln am Dach festgeschraubt oder mit ihm verrastet werden. Diese Arbeiten sind sehr zeitaufwendig und erfordern ein Überkopfarbeiten des Monteurs in der Fahrzeugkabine.

Der Erfindung liegt das Problem zugrunde, ein Kraftfahrzeugdach der eingangs genannten Art so auszubilden, daß an ihm angebrachte Sonnenblenden mit hoher Haltekraft befestigbar sind, dennoch aber eine Demontage der Sonnenblenden ohne ihre Zerstörung möglich wird. Weiterhin soll eine Montagevorrichtung zur Montage von Sonnenblenden geschaffen werden.

Das erstgenannte Problem wird erfindungsgemäß durch die kennzeichnenden Merkmale des Patentanspruches 1 gelöst.

Solche Federklammern haben gegenüber elastisch federnden Kunststoffteilen den Vorteil, eine hohe Haltekraft zu ermöglichen und sich bei starken Zugkräften so verformen zu können, daß es zu einem Ausrasten ohne Zerstörung des Dachanbauteils oder der Federklammer kommt. Durch die horizontale Ausrichtung des Karosseriebleches im Bereich der Rastausnehmung wird eine automatische Zuführung und Montage der Sonnenblende möglich, da diese im Kraftfahrzeug lediglich vertikal nach oben bewegt werden muß, bis die Federklammer in die entsprechende Rastausnehmung einrastet.

Durch die erfindungsgemäße Befestigung der Federklammer an der Lagerbuchse kann schon vor der Befestigung der Lagerbuchse am Kraftfahrzeugdach die Federklammer mit der Lagerbuchse verbunden werden. Anschließend kann man die Lagerbuchse mit der in ihr eingesetzten Schwenkachse der Sonnenblende, der Federklammer und der Sonnenblende selbst in die Rastausnehmung des Kraftfahrzeugdaches einsetzen, so daß eine automatische Montage gänzlich ohne Werkzeuge möglich wird.

Die Federklammer ist besonders einfach gestaltet und deshalb kostengünstig herstellbar, wenn sie einen U-förmigen, mittleren Bereich hat, mit dem sie über die Lagerbuchse greift und dessen Schenkel die ersten Klemmflächen bilden und wenn sich an den Enden dieser Schenkel jeweils eine 180°-Umlenkung und daran anschließend jeweils ein Federarm mit der zweiten Klemmfläche anschließt.

Von Vorteil ist es auch, wenn der horizontal ausgerichtete Bereich des Karosseriebleches mit der Rastausnehmung an einem oberhalb eines Innenbleches des Kraftfahrzeugdaches verlaufenden Verstärkungsblech vorgesehen ist. Ein solches Verstärkungsblech verläuft in den Bereichen, in welchen Dachanbauteile zu montieren sind. Die waagerechte Auslegung des Verstärkungsblechs ermöglicht eine vertikale Ausrichtung der Rastausnehmungen, wodurch eine automatische Montage möglich ist. Durch die Klemmflächen der erfindungsgemäßen Federklammer in verschiedenen Bereichen braucht die Anlagefläche, gegen welche das Dachanbauteil anliegt, nicht zugleich das Karosserieblech zu sein, mit welchem es verrastet ist.

Das zweitgenannte Problem, nämlich die Schaffung einer Montagevorrichtung zur Montage von Sonnenblenden, wird erfindungsgemäß dadurch gelöst, daß sie ein Montagegestell mit Aufnahmen für die zu montierenden Sonnenblenden aufweist und daß das Montagegestell zum Aufsetzen und Fixieren eines Formhimmels auf die in den Aufnahmen gehaltenen Sonnenblenden und zum Einfahren des Formhimmels mit den Sonnenblenden in das Kraftfahrzeug sowie zum Fixieren der Sonnenblenden mit dem Formhimmel am Kraftfahrzeugdach ausgebildet ist.

Dabei ist es von Vorteil, wenn das Montagegestell weitere Aufnahmen für weitere mit Federklammern versehene Dachanbauteile aufweist.

Der Montagevorgang ist mit besonders geringem Aufwand automatisch durchzuführen, wenn das Montagegestell zum Einfahren durch die Frontscheibenöffnung des Kraftfahrzeugs ausgebildet ist.

Die Erfindung läßt zahlreiche Ausführungsformen zu. Zur weiteren Verdeutlichung ihres Grundprinzips sind mehrere davon in Zeichnungen dargestellt und nachfolgend beschrieben. Die Zeichnungen zeigen in
- Fig. 1: einen schematischen Querschnitt durch einen rechten Randbereich eines Kraftfahrzeugdaches mit einer an ihm befestigten Sonnenblende,
- Fig. 2: eine perspektivische Darstellung einer Montagevorrichtung nach der Erfindung.

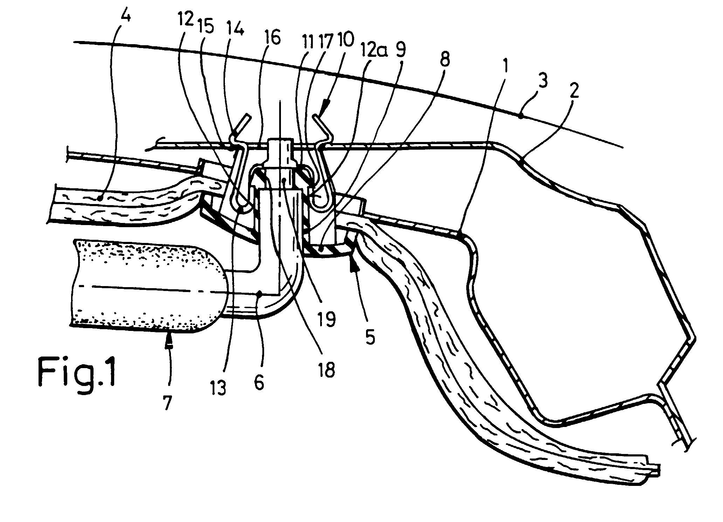

Die Figur 1 zeigt von einem Kraftfahrzeugdach teilweise ein Innenblech 1, ein als Verstärkungsblech ausgebildetes Karosserieblech 2 und eine Dachhaut 3. Von innen her liegt gegen das Innenblech 1 ein als Dachverkleidung dienender Formhimmel 4 an. Der in Figur 1 dargestellte Bereich zeigt weiterhin ein als Lagerbock ausgebildetes Dachanbauteil 5, in welches eine Schwenkachse 6 einer Sonnenblende 7 um eine vertikale Achse drehbar gelagert ist.

Das als Lagerbock ausgebildete Dachanbauteil 5 besteht aus einem Träger 8 und einer Lagerbuchse 9, in welcher die Schwenkachse 6 gelagert ist. Außenseitig über die Lagerbuchse 9 greift eine Federklammer 10 mit einem U-förmigen Bereich 11, welcher mit ersten Klemmflächen 12, 12a gegen die Lagerbuchse 9 anliegt. Diesen Klemmflächen 12, 12a folgt jeweils eine 180°-Umlenkung 13 und ein Federarm 14, der mit einer zweiten Klemmfläche 15, 15a über eine zylindrische Rastausnehmung 16 im Karosserieblech 2 greift und dadurch das Dachanbauteil 5 in Position hält.

Die Federklammer 10 ist ihrerseits durch einen umlaufenden, äußeren Rastvorsprung 17 der Lagerbuchse 9 auf dieser gehalten. Ein ebenfalls umlaufender, innerer Rastvorsprung 18 der Lagerbuchse 9 greift in eine umlaufende Rastausnehmung 19 der Schwenkachse 6 und fixiert diese dadurch in dem Dachanbauteil 5.

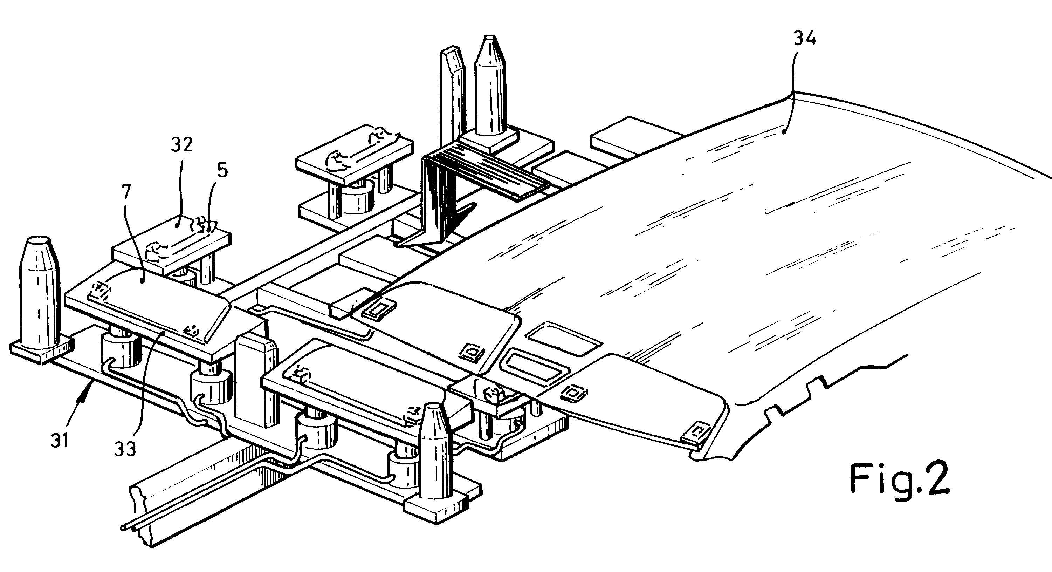

Die Figur 2 zeigt ein Montagegestell 31 mit Aufnahmen 32, 33. In die Aufnahme 32 ist als Dachanbauteil 5 ein Haltegriff eingesetzt, während die Aufnahme 33 eine der Sonnenblenden 7 fixiert. Wie die Figur 6 verdeutlicht, wird nach dem Einsetzen der Dachanbauteile 5, einschließlich der Sonnenblenden 7 und weiterer, möglicherweise ebenfalls zu montierender Dachanbauteile von oben her ein Formhimmel 34 auf die in den Aufnahmen 32, 33 gehaltenen Dachanbauteile 5 gesetzt. Anschließend fixiert man nicht gezeigte Abstandsstücke auf den Formhimmel 34 und fährt dann das Montagegestell 31 mit den genannten Bauteilen durch die Frontscheibenöffnung in das Kraftfahrzeug ein, um die Baueinheit aus Formhimmel 34 und den Anbauteilen 5 durch senkrechtes Verfahren im Kraftfahrzeug fixieren zu können.

## Patentansprüche

1. Kraftfahrzeugdach mit zumindest einer daran befestigten Schwenkachse (6) einer Sonnenblende (7), welches zum Halten der Schwenkachse (6) eine Federklammer (10) zum Verrasten mit einer Rastausnehmung (16) in einem Karosserieblech (2) des Kraftfahrzeugdaches aufweist, wobei das Karosserieblech (2) im Bereich der Rastausnehmungen (16) horizontal ausgerichtet und die Federklammer (10) mit ersten Klemmflächen (12, 12a) lösbar mit der Schwenkachse (6) und mit zweiten, als federnde Rasten ausgebildeten Klemmflächen (15) hinter die Rastausnehmung (16) greift, **dadurch gekennzeichnet**, daß die Schwenkachse (6) in einer Lagerbuchse (9) gelagert ist, auf die von der Seite des Kraftfahrzeugdaches her die Federklammer (19) aufgeschoben und mit der sie durch einen äußeren Rastvorsprung (17) der Lagerbuchse (9) gehalten ist und daß die Lagerbuchse)(9) zusätzlich an ihrem dachseitigen Ende einen nach innen gerichteten, in eine Rastausnehmung (19) der Schwenkachse (6) greifenden zweiten Rastvorsprung (18) hat.

2. Kraftfahrzeugdach nach Anspruch 1, **dadurch gekennzeichnet**, daß die Federklammer (10) einen U-förmigen, mittleren Bereich (11) hat, mit dem sie über die Lagerbuchse (9) greift und dessen Schenkel die ersten Klemmflächen (12, 12a) bilden und daß sich an den Enden dieser Schenkel jeweils eine 180°-Umlenkung (13) und daran anschließend jeweils ein Federarm (14) mit der zweiten Klemmfläche (15) anschließt.

3. Kraftfahrzeugdach nach den Ansprüchen 1 oder 2, **dadurch gekennzeichnet**, daß der horizontal ausgerichtete Bereich des Karosseriebleches (2) mit der Rastausnehmung (16) an einem oberhalb eines Innenbleches (1) des Kraftfahrzeugdaches verlaufenden Verstärkungsblech vorgesehen ist.

4. Kraftfahrzeugdach nach zumindest einem der vorangehenden Ansprüche, **dadurch gekennzeichnet**, daß die Sonnenblende (7) an einem Formhimmel (4) des Kraftfahrzeugdaches vorfixiert und zusammen mit dem Formhimmel (4) am Kraftfahrzeugdach befestigt ist.

5. Montagevorrichtung zur Montage von Sonnenblenden (7) nach zumindest einem der vorangehenden Ansprüche, **dadurch gekennzeichnet**, daß sie ein Montagegestell (31) mit Aufnahmen (33) für die zu montierenden Sonnenblenden (7) aufweist und daß das Montagegestell (31) zum Aufsetzen und Fixieren eines Formhimmels (34) auf die in den Aufnahmen (33) gehaltenen Sonnenblenden (7) und zum Einfahren des Formhimmels (34) mit den Sonnenblenden (7) in das Kraftfahrzeug sowie zum Fixieren der Sonnenblenden (7) mit dem Formhimmel (34) am Kraftfahrzeugdach ausgebildet ist.

6. Montagevorrichtung nach Anspruch 5, **dadurch gekennzeichnet**, daß das Montagegestell (31) weitere Aufnahmen (32) für weitere mit Federklammern (10) versehene Dachanbauteile (5) aufweist.

7. Montagevorrichtung nach den Ansprüchen 5 oder 6, **dadurch gekennzeichnet**, daß das Montagegestell (31) zum Einfahren durch die Frontscheibenöffnung des Kraftfahrzeugs ausgebildet ist.

## Claims

1. Motor vehicle roof with at least one pivot shaft (6) of a sun visor (7) attached thereto, which roof comprises for holding the pivot shaft (6) a spring clip (10) for latching with a latch recess (16) in a body panel (2) of the motor vehicle roof, wherein the body panel (2) is horizontally oriented in the region of the latch recesses (16) and the spring clip (10) engages with first clamping surfaces (12, 12a) releasably with the pivot shaft (6) and with second clamping surfaces (15) constructed as spring catches behind the latch recess (16), characterised in that the pivot shaft (6) is mounted in a bearing bush (9) onto which the spring clip (19) is fitted from the side of the motor vehicle roof and with which it is held by an external latch projection (17) of the bearing bush (9) and in that the bearing bush (9) additionally has at its roof end an inwardly directed second latch projection (18) engaging in a latch recess (19) of the pivot shaft (6).

2. Motor vehicle roof according to claim 1, characterised in that the spring clip (10) has a U-shaped central region (11) with which it engages over the bearing bush (9) and whose arms form the first clamping surfaces (12, 12a) and in that adjoining each of the ends of these arms is a 180° deflection (13) and, adjoining the latter, a spring arm (14) with the second clamping surface (15).

3. Motor vehicle roof according to claim 1 or 2, characterised in that the horizontally oriented region of the body panel (2) with the latch recess (16) is provided on a reinforcing panel extending above an interior panel (1) of the motor vehicle roof.

4. Motor vehicle roof according to one or more of the preceding claims, characterised in that the sun visor (7) is prefixed to a moulded lining (4) of the motor vehicle roof and attached together with the moulded lining (4) to the motor vehicle roof.

5. Assembly device for the assembly of sun visors (7) according to one or more of the preceding claims, characterised in that it comprises an assembly frame (31) with receptacles (33) for the sun visors (7) to be assembled and in that the assembly frame (31) is designed for mounting and fixing a moulded lining (34) on the sun visors (7) held in the receptacles (33) and for moving the moulded lining (34) with the sun visors (7) into the motor vehicle as well as for fixing the sun visors (7) with the moulded lining (34) to the motor vehicle roof.

6. Assembly device according to claim 5, characterised in that the assembly frame (31) comprises further receptacles (32) for further roof attachments (5) provided with spring clips (10).

7. Assembly device according to claim 5 or 6, characterised in that the assembly frame (31) is designed for moving through the windscreen opening of the motor vehicle.

## Revendications

1. Toit de véhicule automobile avec au moins un axe de pivotement (6) pour un pare-soleil (7) fixé à celui-ci, comportant pour la fixation de l'axe de pivotement (6), une agrafe élastique (10) qui s'encliquète dans une ouverture d'encliquetage (16) dans une tôle de carrosserie (2) du toit de véhicule, la tôle de carrosserie (2) s'étendant horizontalement dans la région des ouvertures d'encliquetage (16) et l'agrafe élastique (10) étant encliquetée de manière séparable sur l'axe de pivotement (6) par des premières surfaces de serrage (12, 12a) et dans l'ouverture d'encliquetage (16) par des secondes surfaces de serrage (15) conformées en languettes élastiques, caractérisé par le fait que l'axe de pivotement (6) est monté dans une douille-palier (9) sur laquelle l'agrafe élastiques est enfilée à partir du côté toit du véhicule et avec laquelle elle est fixée par une saillie d'encliquetage (17) extérieure de la douille-palier (9) et par le fait que la douille-palier (9) comporte en plus à son extrémité côté toit du véhicule une seconde saillie d'encliquetage (18) dirigée vers l'intérieur, qui pénètre dans un évidement (19) de l'axe de pivotement (6).

2. Toit de véhicule automobile selon la revendication 1, caractérisé par le fait que l'agrafe élastique (10) comporte une partie intermédiaire (11) en forme de U, par laquelle elle s'engage sur la douille-palier (9) et dont les branches forment les premières surfaces de serrage (12, 12a) et par le fait qu'aux extrémités de ces branches se raccorde un coude à 180° (13) suivi chaque fois d'une branche de ressort (14) portant la seconde surface de serrage (15).

3. Toit de véhicule automobile selon la revendication 1 ou 2, caractérisé par le fait que la partie horizontale de la tôle de carrosserie (2) avec l'ouverture d'encliquetage (16) est prévue dans une tôle de renfort disposée au-dessus d'une tôle intérieure (1) du toit de véhicule automobile.

4. Toit de véhicule automobile selon au moins unes des revendications précédentes, caractérisé par le fait que la pare-soleil (7) est préfixé à un habillage de plafond (4) préformé du toit de véhicule et est fixé au toit de véhicule avec l'habillage de plafond (4) préformé.

5. Dispositif de montage pour le montage de pare-soleil (7) selon au moins une des revendications précédentes, caractérisé par le fait qu'il comprend un bâti de montage (31) avec des supports (33) pour les pare-soleil (7) à monter et par le fait que le bâti de montage (31) est agencé pour placer et fixer un habillage de toit (34) préformé sur les pare-soleil (7) tenus sur les supports (33) et pour introduire l'habillage de toit (34) préformé avec les pare-soleil (7) dans le véhicule et fixer l'habillage de toit (34) préformé avec les pare-soleil (7) au toit de véhicule.

6. Dispositif de montage selon la revendication 5, caractérisé par le fait que le bâti de montage (31) comporte des supports supplémentaires (32) pour d'autres équipements de toit (5) munis d'agrafes élastiques (10).

7. Dispositif de montage selon la revendication 5 ou 6, caractérisé par le fait que le bâti de montage (31) est agencé de manière à pouvoir être introduit dans le véhicule à travers l'ouverture de pare-brise du véhicule automobile.
